# EUROPÄISCHE PATENTANMELDUNG

(11) **EP 1 106 848 A1**
(43) Veröffentlichungstag der Anmeldung: **13.06.2001**
(21) Anmeldenummer: 00123994.6
(22) Anmeldetag: 08.11.2000
(51) Int. Cl.: F16C 11/04, F16C 17/02, F16C 33/06, F16C 29/02

(54) **Hülse**

(30) Priorität: 06.12.1999 CH 224799
(71) Anmelder: Straub Werke AG, 7323 Wangs (CH)
(72) Erfinder: Schumacher, Alois, 8808 Pfäffikon/SZ (CH)
(74) Vertreter: Rosenich, Paul

(57) **Zusammenfassung**

Die Erfindung betrifft eine Hülse, welche an wenigstens einer ihrer Mantelflächen in Umfangsrichtung im Abstand voneinander angeordnete einzelne Erhebungen (42) aufweist. Mittels der Erhebungen (42) kann die Passgenauigkeit der Hülse verbessert werden, sodass andere arbeitsintensivere Nachbearbeitungsoperationen zur Verringerung der Fertigungstoleranzen bzw. zum Erreichen einer bestimmten Aufschiebekraft entfallen können.

## Beschreibung

Die vorliegende Erfindung betrifft eine Hülse zur Überbrückung des Durchmesser-Unterschiedes zwischen einer Führung und einer darin beweglich gelagerten Achse oder Welle.

In der Technik werden Toleranzhülsen eingesetzt, um Geräteteile, wie Wellen, Achsen, Lager oder dergleichen, in Bohrungen zu haltem. Wie bereits der Name ausdrückt, haben Toleranzhülsen die Funktion, Toleranzen zwischen der Bohrung und dem in der Bohrung aufgenommenen Teil auszugleichen und gleichzeitig eine reibschlüssige Verbindung zwischen dem aufzunehmenden Teil und der Bohrung herzustellen (Fall a).

Eine andere Verwendung von Toleranzhülsen ist diejenige einer Überlastkupplung (Fall b). Die Funktion einer Überlastkupplung ist es, eine relative Drehung zwischen dem in der Bohrung aufgenommenen Teil und der Bohrung erst ab einem bestimmten Drehmoment zu ermöglichen. Im Fahrzeugbau werden Toleranzhülsen z.B. in der Diebstahlsicherung eingesetzt. Zu diesem Zweck erfolgt die Drehmomentübertragung einer geteilten Lenksäule mittels einer oder mehrerer Toleranzhülsen. Somit wird ein Abwürgen des Lenkradschlosses durch Drehen des Lenkrades verunmöglicht.

Es sind verschiedenste Ausführungsformen von Toleranzhülsen oder -ringen bekannt. Im deutschen Patent Nr. 838 237 ist ein Toleranzring mit axial verlaufenden Sicken offenbart. Der Ring ist in radialer Richtung federnd und dient beispielsweise dazu, Wälzlager in einer Wälzlageranordnung zu haltern.

In der DE 2 018 367 sind Toleranzringe mit mehreren in axialer Richtung hintereinander angeordneten Prägestellen bekannt geworden. Gemäss DE 2 018 367 sorgen mehrere hintereinander angeordnete Reihen von Prägestellen für eine grössere Reibschlusskraft als durchgehende Prägestellen derselben Länge.

Den ein- oder mehrreihigen Toleranzringen ist gemeinsam, dass die Ausprägungen für eine Federung des Rings in radialer Richtung sorgen, sodass der Toleranzring im montierten Zustand eine grosse Spannkraft ausüben und einen Reibschluss zwischen dem Toleranzring und den beiden innen und aussen am Toleranzring anliegenden Teilen bewirken kann. Aufgabe der Toleranzhülsen ist es, ein Drehen des in der Bohrung aufgenommenen Teils entweder gänzlich zu verhindern (s. Fall a oben) oder erst ab einem bestimmten Mindestdrehmoment zu ermöglichen (Fall b).

Im Unterschied zu Toleranzringen werden Führungshülsen im Maschinen- und Automobilbau eingesetzt, um den Durchmesser-Unterschied zwischen einer Führung und einer darin beweglich gelagerten Achse oder Welle zu überbrücken. In solchen Verwendungen müssen die Führungshülsen meist bestimmte Mindesttoleranzen einhalten, damit das radiale Spiel zwischen Führung, Führungshülse und Achse nicht zu gross ist.

Aus Wirtschaftlichkeitsgründen werden insbesondere im Automobilbau solche Führungshülsen meistens als gerollte Hülsen hergestellt, indem eine Platine zunächst aus einem grösseren Stück Blech ausgestanzt und dann zu einer Hülse gerollt wird. Ein Nachteil der gerollten Hülsen ist jedoch, dass es schwierig ist, diese mit den erforderlichen geringen Fertigungstoleranzen herzustellen.

Um gerollte Hülsen mit kleinen Toleranzen herzustellen, müssen diese nachbearbeitet werden. Dies geschieht beispielsweise dadurch, dass die Bohrung in der Hülse nachträglich mittels eines kalibrierten Werkzeuges ausgerieben wird.

In der DE 3216880 ist eine Hülse offenbart, die an ihrem Umfang mit zusätzlichen Klemmelementen versehen ist. Die Klemmelemente sind so ausgebildet, dass diese sich elastisch radial nach innen verformen, wenn die Hülse in eine Bohrung eingesetzt wird. Sobald die Hülse in Position gebracht worden ist, springen die Klemmelemente clipartig zurück, sodass die Hülse zusätzlich axial gesichert ist und nicht wieder herausfallen kann. Die Hülse der DE 3216880 hat gegenüber glatten Hülsen den Vorteil, dass sie in einem geringen Ausmass auch axiale Kräfte übertragen kann.

### Aufgabe der Erfindung

Aufgabe der vorliegenden Erfindung ist es, eine Hülse mit kleiner Fertigungstoleranz kostengünstig bereitzustellen, sodass eine praktisch spielfreie Verbindung zwischen der Hülse einerseits und Achse und/oder Führung andererseits realisierbar ist. Ein weiteres Ziel ist es, eine Hülse bereitzustellen, welche - einmal auf eine Welle aufgesetzt - nicht selbsttätig verrutscht.

### Beschreibung der Erfindung

Erfindungsgemäss wird das Ziel dadurch realisiert, dass die Hülse an wenigstens einer ihrer Mantelflächen in Umfangsrichtung im Abstand voneinander angeordnete einzelne Erhebungen aufweist. Die an wenigstens der inneren oder äusseren Mantelfläche angeordneten Erhebungen erlauben, beider Herstellung der Hülse auftretende Form- und Massabweichungen zu kompensieren. Insbesondere können mit den Erhebungen zusätzliche Nachbearbeitungsoperationen, die zur Erreichung einer bestimmten Fertigungstoleranz nötig sind, vermieden werden. Durch Anbringen von Erhebungen können erfindungsgemäss Hülsen mit passgenauem Sitz hergestellt werden. Durch entsprechende Ausbildung der Erhebungen können auch Hülsen hergestellt werden, die - einmal auf eine Welle aufgesetzt - nicht selbsttätig verrutschen.

Die Erhebungen können grundsätzlich die unterschiedlichsten Formen besitzen. Vorzugsweise sind diese im wesentlichen als punkt- oder linienförmige Erhebungen ausgebildet. Die punktförmigen Erhebungen können dabei die Gestalt von Noppen haben. Obwohl die linienförmigen Erhebungen auch quer zur Achsrichtung der Hülse verlaufen können, sind diese vorzugsweise in Achsrichtung der Hülse angeordnet. Die Erhebungen dienen vorzugsweise als Punkt- oder Linienauflage.

Vorteilhaft ist die Hülse in radialer Richtung im wesentlichen nicht elastisch verformbar, d.h. die Erhebungen haben - im Unterschied zu Toleranzringen - nicht die Funktion, den Ring in radialer Richtung federnd zu machen, sondern für einen passgenauen Sitz zu sorgen. Die Höhe der Erhebungen sind daher stets kleiner als die Wandstärke der Hülse, und vorzugsweise ist das Verhältnis der Höhe der Erhebung zur Wandstärke der Hülse ≤ 0.5 und vorzugsweise ≤ 0.3.

Bei Hülsen mit einem Durchmesser bis zu 20 mm sind die Erhebungen vorzugsweise ≤ 0.5 mm und vorzugsweise < 0.3 mm. Soll die Hülse auf einer Welle oder einer Achse angeordnet werden, so sind die Erhebungen vorzugsweise an der inneren Mantelfläche vorgesehen. Dies hat den Vorteil, dass das Spiel zwischen Welle oder einer Achse und der Hülse praktisch eliminiert werden kann. Sind die Erhebungen in Umfangsrichtung gleichmässig verteilt angeordnet, so lässt sich eine gute Zentrierung der Hülse erreichen. Vorteilhaft sind wenigstens zwei in axialem Abstand voneinander angeordnete und in Umfangsrichtung verlaufende Reihen von Erhebungen vorgesehen. Dabei können die einzelnen Erhebungen axial miteinander fluchtend oder gegeneinander in Umfangsrichtung versetzt angeordnet sein. In vielen Fällen ist ausreichend, wenn eine Reihe wenigstens drei gleichmässig über den Umfang verteilte Erhebungen aufweist. Drei Erhebungen sind bei Hülsen kleineren Durchmessers ausreichend, um die Hülse gut zu zentrieren.

Obwohl die Erhebungen grundsätzlich auf unterschiedliche Arten herstellbar sind, werden diese vorzugsweise durch Einprägungen auf der Rückseite gebildet. Einprägungen lassen sich durch geeignete Stempel automatisch herstellen. Die Hülsen können aus unterschiedlichen Metallen bzw. Metalllegierungen bestehen. Vorteilhaft ist die Hülse jedoch aus Stahlblech hergestellt.

Eine erfindungsgemässe Hülse wird hergestellt, indem eine flache, rechteckige, vorzugsweise aus Stahlblech bestehende Platine gestanzt, mit quer zu ihrer Längsachse mit einzelnen in Abständen voneinander angeordneten Einprägungen versehen und dann zu einer Hülse gerollt wird. Vorzugsweise erfolgt das Stanzen und Prägen in einer Operation. Alternativ kann die Hülse auch zuerst gerollt und dann mit Einprägungen versehen werden. Im letzteren Fall wird die Hülse für den Prägevorgang auf einen elastisch verformbaren, beispielsweise aus Kunststoff bestehende Dom aufgesteckt und dann die Einprägungen in das Metall eingedrückt.

Vorteilhaft werden die Längskanten der aus einem grösseren Stück Blech ausgestanzten Platine auf Stoss zusammengerollt. Denkbar ist jedoch auch, dass zwischen den Längskanten der zusammengerollten Hülse ein Spalt verbleibt. Vorzugsweise wird die Platine mit im wesentlichen punkt- oder linienförmigen Einprägungen versehen. Diese lassen sich kostengünstig herstellen und erlauben, die Passgenauigkeit der Hülse zu verbessern.

Die erfindungsgemässe Hülse eignet sich insbesondere als Führungshülse für eine in einer Führung beweglich gelagerte Achse oder Welle. Durch das Anbringen von Erhebungen kann eine praktisch spielfreie Verbindung zwischen der Hülse und der Achse oder Welle realisiert werden. Besonders vorteilhaft lässt sich mit der erfindungsgemässen Hülse der Durchmesser-Unterschied zwischen einer Führung und einer darin beweglich gelagerten Achse oder Welle ausgleichen. So kann z.B. die Hülse auf den verjüngten Schaft eines Spannbolzens, mit welchem die Einstellung einer Fahrzeuglenksäule arretiert wird, aufgesetzt sein, um als Führungshülse zu dienen.

Die Erfindung soll nachstehend anhand der sie beispielsweise wiedergebenden Zeichnungen näher erläutert werden. Es zeigen.
- Fig. 1: Schematisch einen Klemmechanismus für die Feststellung einer verstellbaren Lenksäule eines Fahrzeuges, in gelöster Stellung;
- Fig.2: eine erfindungsgemäss ausgebildete Hülse, welche in dem in Fig. 1 dargestellten Klemmechanismus Verwendung findet;
- Fig.3: eine stirnseitige Ansicht der in Fig. 2 gezeigten Hülse, in Richtung des Pfeiles B;
- Fig.4: einen Querschnitt durch die in Fig. 2 gezeigte Hülse, im Bereich C ÷ C;
- Fig.5: den Klemmechanismus gemäss Fig. 1, in festgeklemmter Stellung.

### Beschreibung der Ausführungsbeispiele

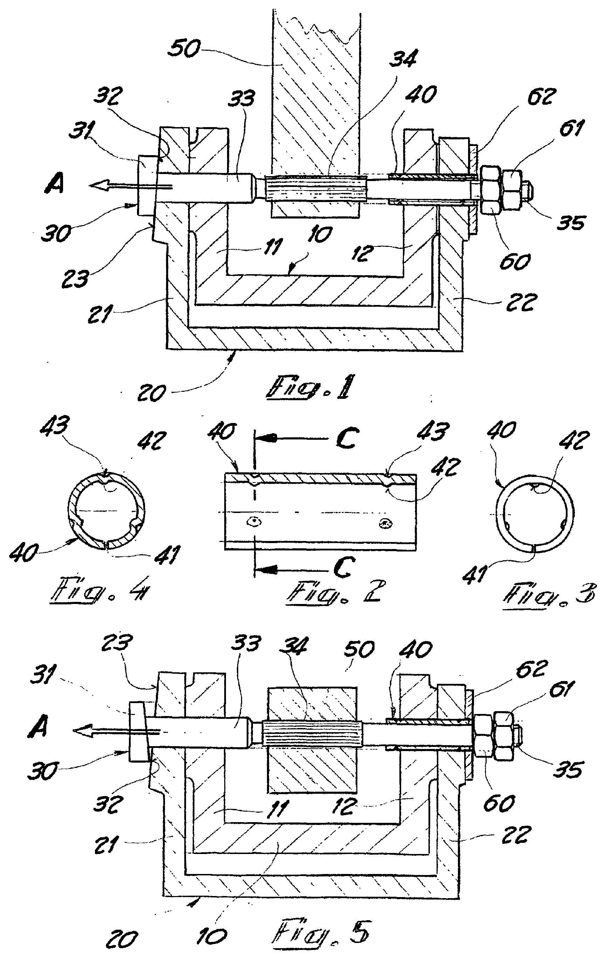

Der aus den Fig. 1 und 5 ersichtliche und beispielsweise in der EP-A-0 802 104 näher im Detail beschriebene Klemmechanismus besteht im wesentlichen aus einem Gehäuse 10 und einer das Gehäuse 10 teilweise umgebenden Konsole 20. Das Gehäuse 10 dient der Aufnahme einer aus Übersichtlichkeitsgründen nicht dargestellten Lenksäule eines Fahrzeugs. Die Konsole 20 wird mit dem Fahrgestell des Fahrzeugs verbunden. Sowohl das Gehäuse 10 als auch die Konsole 20 sind im Querschnitt im wesentlichen U-förmig ausgebildet. Ein Spannbolzen 30 durchquert die parallel zueinander verlaufenden Schenkel 11,12 und 21,22 des Gehäuses 10 und der Konsole 20. Das Gehäuse 10 ist somit in der Konsole 20 um den Spannbolzen 30 schwenkbar gelagert.

Der Spannbolzen 30 weist an seinem rückwärtigen Ende einen Kopf 31 mit einer Nocke 32 auf. Der mittlere und vordere Schaftbereich ist gegenüber dem an den Kopf 31 anschliessenden Halsteil 33 im Durchmesser reduziert. Der mittlere Schaftbereich des Spannbolzens 30 ist mit einer Kerbverzahnung 34 versehen. Eine Hülse 40 umgibt den Spannbolzen 30 im vorderen Schaftbereich und durchsetzt sowohl den Schenkel 12 des Gehäuses 10 als auch den Schenkel 22 der Konsole 20.

Das vordere Ende des Spannbolzens 30 ist mit einem Gewinde 35 versehen. Auf das Gewinde 35 sind eine Mutter 60 und eine Kontermutter 61 aufgeschraubt Zwischen der Mutter 60 und dem Schenkel 22 der Konsole 20 ist eine U-Scheibe 62 angeordnet. In dem mit der Kerbverzahnung 34 versehenen Bereich ist ein Klemmhebel 50 drehfest mit dem Spannbolzen 30 verbunden. Der Spannbolzen 30 kann somit mit Hilfe des Klemmhebels 50 um seine Längsachse verdreht werden.

Der Schenkel 21 der Konsole 20 weist eine als Steuerkurve dienende, geneigte Auflaufschräge 23 auf. Der Nocken 32 des Spannbolzens 30 stützt sich in axialer Richtung an der Auflaufschräge 23 ab. Beim Verdrehen des Spannbolzens 30 läuft der Nocken 32 an der Auflaufschräge 23 auf und bewirkt somit eine Axialverschiebung des Spannbolzens 30 relativ zur Konsole 20 in Richtung des Pfeiles A.

Bei der in Fig. 1 dargestellten, gelösten Stellung besteht zwischen dem Gehäuse 10 und der Konsole 20, bzw. zwischen der Mutter 60 und der U-Scheibe 62, bzw. dem Schenkel 22 der Konsole axiales Spiel. Das Gehäuse 10 kann somit um den Spannbolzen 30 relativ zur Konsole 20 verdreht werden.

Die Hülse 40 des Gehäuses 10 dient der Überbrückung des Durchmesserunterschiedes zwischen dem wegen der Kerbverzahnung 34 reduzierten Durchmesserbereich des Spannbolzens 30 und den Bohrungen in den Schenkeln 12,22 des Gehäuses 10, bzw. der Konsole 20. Um radiales Spiel möglichst aufzuheben ist dabei eine relativ genaue Passung der Hülse 40 auf dem Spannbolzen 30, bzw. im Gehäuse 10 und der Konsole 20 notwendig.

Die in den Fig. 2 bis 4 im Detail gezeigte Hülse 40 ist beispielsweise als gerolltes Blechteil hergestellt. Die Hülse 40 ist im Querschnitt im wesentlichen zylindrisch und weist einen im Ausgangszustand praktisch geschlossenen Längsschlitz 41 auf. In den beiden Endbereichen der Hülse 40 ist an der Innenseite je eine Gruppe von drei gleichmässig über den Umfang verteilten Erhebungen 42 angeordnet. Diese Erhebungen 42 können beispielsweise durch Einprägungen 43 auf der Rückseite hergestellt werden. Die Erhebungen 42 bilden im wesentlichen punktförmige Auflagen. Sie dienen der Zentrierung der Hülse 40 auf dem Spannbolzen 30. Durch die Höhe der Erhebungen 42, bzw. die Tiefe der Einprägungen 43 lässt sich der Sitz der Hülse 40 auf dem Spannbolzen 30, bzw. die für das axiale Verschieben der Hülse 40 auf dem Spannbolzen 30 erforderliche Kraft sehr gut beherrschen.

Bei der in Fig. 5 ersichtlichen Klemmvorrichtung ist der Spannbolzen 30 mit Hilfe des Klemmhebels 50 gegenüber der in Figur 1 gezeigten Stellung relativ zum Gehäuse 10, bzw. zur Konsole 20 verdreht worden. Dabei ist der Nocken 32 an der Auflaufschräge 23 aufgelaufen und hat dabei den Spannbolzen 30 in Richtung des Pfeiles A verschoben. Dadurch wird die gesamte Baugruppe axial zusammengezogen, das Spiel zwischen dem Gehäuse 10 und der Konsole 20 aufgehoben und die Bauteile relativ zueinander festgeklemmt.

Die gezeigte Ausführung ermöglicht lediglich eine Schwenkbewegung des Gehäuses 10 relativ zur Konsole 20. Durch die Ausbildung der Durchtrittsöffnungen in den Schenkeln 11,12,21,22 als Längsschlitze wird auch eine erweiterte Verstellbarkeit der Lenksäule in verschiedenen Richtungen (z.B. Schwenken und Axialverschiebbarkeit) ermöglicht.

Die Erfindung betrifft eine Hülse, welche an wenigstens einer ihrer Mantelflächen in Umfangsrichtung im Abstand voneinander angeordnete einzelne Erhebungen 42 aufweist. Mittels der Erhebungen 42 kann die Passgenauigkeit der Hülse verbessert werden, sodass zusätzliche arbeitsintensivere Nachbearbeitungsoperationen zur Verringerung der Fertigungstoleranzen bzw. zum Erreichen einer bestimmten Aufschiebekraft entfallen können.

### Legende:

- 10: Gehäuse
11 Schenkel
12 Schenkel
- 20: Konsole
21 Schenkel
22 Schenkel
23 Auflaufschräge
- 30: Spannbolzen
31 Kopf
32 Nocken
33 Halsteil
34 Kerbverzahnung
35 Gewinde
- 40: Hülse
41 Längsschlitz
42 Erhebung
43 Einprägung
- 50: Klemmhebel
- 60: Mutter
- 61: Kontermutter
- 62: U-Scheibe

## Patentansprüche

1. Hülse zur Überbrückung des Durchmesser-Unterschiedes zwischen einer Führung und einer darin beweglich gelagerten Achse oder Welle , dadurch gekennzeichnet, dass die Hülse an wenigstens einer ihrer Mantelflächen in Umfangsrichtung im Abstand voneinander angeordnete einzelne Erhebungen (42) aufweist.

2. Hülse nach Anspruch 1, dadurch gekennzeichnet, dass die Erhebungen (42) im wesentlichen punktförmig sind.

3. Hülse nach Anspruch 1, dadurch gekennzeichnet, dass die Erhebungen (42) im wesentlichen linienförmig sind.

4. Hülse nach Anspruch 3, dadurch gekennzeichnet, dass die linienförmigen Erhebungen (42) in Achsrichtung der Hülse (40) verlaufen.

5. Hülse nach einem der Ansprüche 1 bis 4, dadurch gekennzeichnet, dass die Erhebungen (42) als Punkt- oder Linienauflage dienen.

6. Hülse nach einem der Ansprüche 1 bis 5, dadurch gekennzeichnet, dass die Hülse (40) in radialer Richtung im wesentlichen nicht elastisch verformbar ist.

7. Hülse nach einem der Ansprüche 1 bis 6, dadurch gekennzeichnet, dass das Verhältnis der Höhe der Erhebung (42) zur Wandstärke der Hülse ≤ 0.5 und vorzugsweise ≤ 0.3 beträgt.

8. Hülse nach einem der Ansprüche 1 bis 6, dadurch gekennzeichnet, dass die Höhe der aus der Mantelfläche herausragenden Erhebungen (42) < 0.5 mm und vorzugsweise < 0.3 mm betragen.

9. Hülse nach einem der Ansprüche 1 bis 8, dadurch gekennzeichnet, dass die Erhebungen (42) an der inneren Mantelfläche angeordnet sind.

10. Hülse nach einem der Ansprüche 1 bis 9, dadurch gekennzeichnet, dass die Erhebungen (42) in Umfangsrichtung gleichmässig verteilt angeordnet sind.

11. Hülse nach einem der Ansprüche 1 bis 10, dadurch gekennzeichnet, dass wenigstens zwei in axialem Abstand voneinander angeordnete und in Umfangsrichtung verlaufende Reihen von Erhebungen (42) vorgesehen sind.

12. Hülse nach Anspruch 11, dadurch gekennzeichnet, dass jede Reihe drei gleichmässig über den Umfang verteilte Erhebungen (42) umfasst.

13. Hülse nach einem der Ansprüche 1 bis 12, dadurch gekennzeichnet, dass die Erhebungen (42) durch Einprägungen (43) auf der Rückseite gebildet sind.

14. Hülse nach einem der Ansprüche 1 bis 13, dadurch gekennzeichnet, dass die Hülse (40) aus Blech, insbesondere Stahlblech, besteht.

15. Hülse nach einem der Ansprüche 1 bis 14, dadurch gekennzeichnet, dass die Hülse (40) aus gerolltem Blech hergestellt ist.

16. Hülse nach einem der Ansprüche 1 bis 15, dadurch gekennzeichnet, dass die Hülse (40) einen Längsschlitz (41) aufweist.

17. Verfahren zur Herstellung einer Hülse zur Überbrückung des Durchmesser-Unterschiedes zwischen einer Führung und einer darin beweglich gelagerten Achse oder Welle, bei welchem Verfahren eine flache, rechteckige, vorzugsweise aus Stahlblech bestehende Platine, zunächst mit Einprägungen versehen und dann zu einer Hülse (40) gerollt wird, dadurch gekennzeichnet, dass die Platine quer zu ihrer Längsachse mit einzelnen in Abständen voneinander angeordneten Einprägungen (43) versehen und dann zu einer Hülse gerollt wird.

18. Verfahren nach Anspruch 17, dadurch gekennzeichnet, dass die Längskanten der rechteckigen Platine auf Stoss zusammengerollt werden.

19. Verfahren nach Anspruch 17 oder 18, dadurch gekennzeichnet, dass die Platine mit im wesentlichen punkt- oder linienförmigen Einprägungen versehen wird.

20. Verwendung einer Hülse nach einem der Ansprüche 1 bis 16 als Führungs- oder Aufsteckhülse für eine beispielsweise in einer Führung beweglich gelagerte Achse oder Welle.

21. Verwendung einer Hülse nach einem der Ansprüche 1 bis 16 zur Überbrückung des Durchmesser-Unterschiedes zwischen einer Führung und einer darin beweglich gelagerten Achse oder Welle.

22. Verwendung der Hülse nach Anspruch 21 als eine auf einen Spannbolzen (30) des Klemmmechanismus zur Einstellung einer Fahrzeuglenksäule aufsetzbare Führungshülse.
